# FASCICULE DE BREVET EUROPEEN

(11) **EP 1 565 678 B1**
(45) Date de publication et mention de la délivrance du brevet: **10.01.2007**
(21) Numéro de dépôt: 03786046.7
(22) Date de dépôt: 21.11.2003
(51) Int. Cl.: F16K 11/07, F15B 20/00

(54) **VANNE DE REGULATION A TIROIR**
SCHIEBERSTEUERVENTIL
SLIDE CONTROL VALVE

(30) Priorité: 25.11.2002 FR 0214790
(43) Date de publication de la demande: 24.08.2005
(73) Titulaire: Snowstar S.p.A., 25064 Gussago, BS (IT)
(72) Inventeur: CHARRIAU, Patrick, F-85620 Rocheservière (FR)
(74) Mandataire: Laget, Jean-Loup
(86) Numéro de dépôt international: PCT/FR2003/003448
(87) Numéro de publication internationale: WO 2004/051123

(56) Documents cités:
- GB-A- 2 053 419
- GB-A- 2 189 054
- US-A- 4 617 967
- US-A- 4 757 684
- US-A- 5 144 983

## Description

La présente invention concerne une vanne de régulation à tiroir à au moins deux voies d'un nouveau type.

Les vannes de régulation à tiroir à au moins deux voies, une entrée et une sortie, sont généralement utilisées dans des dispositifs d'alimentation en fluide. Une vanne de ce type est en particulier utilisable dans les dispositifs d'alimentation en eau et en air d'un canon à neige.

De telles vannes de régulation s'apparentent aux distributeurs hydrauliques. Toutefois, dans les distributeurs hydrauliques traditionnels, les moyens de commande principaux sont constitués par la pression hydraulique d'alimentation du distributeur. Il en résulte l'impossibilité d'obtenir d'une part des micro-déplacements, d'autre part, une précision importante dans le déplacement du tiroir. Des moyens de commande auxiliaires peuvent quant à eux affecter des modes de réalisation divers et variés. De tels systèmes présentent toutefois l'avantage de pouvoir, en cas de coupure d'alimentation électrique ou en cas d'absence de pression différentielle, placer le système dans une position de sécurité qui peut avoir diverses fonctions.

Ainsi, le brevet GB-A-2.053.419 décrit un système de distributeur hydraulique qui permet, en cas de coupure d'alimentation électrique ou en cas d'absence de pression différentielle, de coupler les ports de sortie entre eux ainsi que les ports d'entrée. Le but est de protéger un actionneur. Dans ce cas, les moyens de commande principaux sont assimilés à la pression hydraulique d'alimentation du distributeur et les moyens de commande auxiliaires sont assimilés à un ensemble de distributeurs particuliers montés judicieusement.

Le document US-A-4.617.967 décrit quant à lui un distributeur hydraulique qui permet, en cas de coupure d'alimentation électrique, de mettre en relation les ports de sortie avec une bâche hydraulique. Le but est d'éviter des situations dangereuses lorsqu'un distributeur commande un organe piloté. Dans ce cas, des moyens de commande principaux sont assimilés à un système de commande hydraulique classique. Les moyens de commande auxiliaires sont constitués par la combinaison d'un ressort et d'électrovannes. En effet, le distributeur est composé d'un tiroir conçu en deux parties : deux ports d'entrée, deux ports de sortie, lesquels ports sont situés au milieu d'une chambre en relation avec une bâche hydraulique. En fonctionnement normal, le tiroir est maintenu en une seule partie grâce à deux électrovannes. En cas de coupure d'alimentation électrique, un ressort permet la séparation du tiroir en deux parties. La disposition des différentes chambres par rapport au tiroir permet, dans ce cas, de mettre en relation les ports de sortie et la bâche.

Le document US-A-5.144.983 décrit quant à lui un distributeur hydraulique proportionnel commandé par électrovanne. En cas de coupure d'alimentation électrique, le piston, étant équilibré par le jeu des forces hydrauliques, revient naturellement en position centrale. Le but est de stopper tout mouvement d'actionneur commandé. Les moyens de commande principaux sont dans ce cas constitués de deux électrovannes tandis que les moyens de commande auxiliaires sont constitués d'une électrovanne et d'un piston.

Enfin, le document GB-A-2.189.054 décrit à nouveau un distributeur commandé par un système buse palette. En cas de coupure d'alimentation électrique, le tiroir est amené dans une position prédéterminée. Les moyens de commande principaux sont constitués par ce système buse/palette asservi à une électrovanne, la position de repli prédéterminée étant obtenue par un moyen de commande auxiliaire constitué par un ressort. Tous ces systèmes permettent donc d'obtenir une position de sécurité lorsque les moyens de commande principaux sont constitués essentiellement par la pression hydraulique d'alimentation du dispositif. Un tel résultat ne peut pas être obtenu lorsque les moyens de commande principaux sont des moyens mécaniques.

Ainsi, le document EP-B-0 187 563 décrit un distributeur à tiroir comportant un corps muni de tubulures d'entrée d'eau et d'air, de tubulures de sortie d'eau et d'air vers le canon à neige et d'un orifice de purge ainsi qu'un tiroir cylindrique entraîné par un organe de commande, tel qu'un motoréducteur, entre une position de fermeture des flux d'eau et d'air permettant également une purge et une position d'ouverture. Le tiroir présente un alésage fileté avec lequel coopère une vis fixe en translation mais entraînée en rotation par le motoréducteur.

Dans WO-A-0101054, on a également proposé un dispositif constitué d'une vanne comportant un corps pourvu d'un canal d'entrée et d'une sortie, la communication entre le canal d'entrée et la sortie s'effectuant à l'aide d'un forage cylindrique et d'un tiroir mobile dans ledit forage. Une purge est également prévue et permet par l'action du tiroir une purge automatique lorsque la vanne est en position normale de fermeture. Le tiroir se déplace sous l'effet de moyens de commande tels qu'un motoréducteur, le tiroir comportant un alésage interne fileté coopérant avec une vis entraînée par le motoréducteur.

Ces systèmes présentent cependant un inconvénient majeur lié à leur alimentation électrique. En effet, l'alimentation électrique permet de faire fonctionner le motoréducteur qui permet, par son action sur le tiroir, de fermer ou d'ouvrir la vanne. Ainsi, lorsqu'il y a une coupure dans l'alimentation électrique alors que la vanne est en position d'ouverture, la vanne ne se referme pas. Il s'ensuit, dans le cas d'un canon à neige par exemple, que celui-ci reste alimenté en eau sans plus aucun moyen de contrôle. Ceci est un réel problème car la conséquence de ce défaut est la formation d'une plaque de glace sur la piste à enneiger mais peut être également un problème important dans d'autres applications.

Afin de pallier cet inconvénient, la présente invention a pour but de proposer une vanne de régulation à tiroir entraîné en déplacement à l'aide d'un organe mécanique et fonctionnant sous alimentation électrique pour permettre le passage de fluides ou l'interrompre, et qui, même en cas d'une coupure de courant en utilisation, peut être fermée pour bloquer le passage de fluide.

A cet effet, l'invention a pour objet une vanne de régulation à tiroir à au moins deux voies, du type comportant un corps pourvu d'une entrée et d'une sortie de fluide reliées par un canal dans lequel se déplace un tiroir actionné en déplacement par des moyens de commande principaux, ledit tiroir se déplaçant entre une position de fermeture complète de la vanne et un position d'ouverture complète de ladite vanne, cette vanne comportant en outre des moyens de commande auxiliaires permettant le déplacement du tiroir de la position d'ouverture à la position de fermeture lors de l'impossibilité de fonctionnement des moyens de commande principaux, caractérisé en ce que les moyens de commande principaux sont constitués par un système vis/écrou dont la vis, solidaire ou apte à être rendue solidaire du tiroir, est montée fixe en rotation et mobile axialement par rapport au corps de vanne, l'écrou du système vis/écrou étant entraînable en rotation à l'aide d'un moteur électrique pour provoquer le déplacement axial de la vis.

Selon une forme de réalisation préférée de l'invention, les moyens de commande principaux sont asservis en fonctionnement à l'actionnement des moyens de commande auxiliaires.

Les moyens de commande auxiliaires sont constitués par au moins un circuit de dérivation comprenant une chambre de dérivation constituée par un compartiment supplémentaire du tiroir, une électrovanne à trois voies permettant d'amener du fluide depuis l'entrée de la vanne vers ladite chambre de dérivation et comprenant une voie de mise à l'échappement de la chambre de dérivation, l'alimentation du circuit de dérivation en fluide sous pression permettant d'exercer, sur le tiroir, un effort tendant à déplacer le tiroir vers la position d'ouverture en vue de rendre opérationnels les moyens de commande principaux, la mise à l'échappement dudit circuit de dérivation permettant le déplacement du tiroir de la position d'ouverture à la position de fermeture lors d'une impossibilité de fonctionnement des moyens de commande principaux. Ainsi, lors de la mise en fonctionnement de la vanne pour le passage d'un fluide tel que de l'eau, l'électrovanne est mise sous tension et laisse passer le fluide depuis l'entrée vers la chambre de dérivation.

La vanne comporte également des butées de fin de course correspondant à la position d'ouverture complète et à la position de fermeture complète de la vanne, la première étant constituée par un épaulement du corps de vanne s'étendant au droit du canal d'entrée, l'autre étant constituée par un épaulement du corps de vanne contre lequel vient en butée le tiroir en position de fermeture, cet épaulement étant disposé entre conduit de sortie et système vis/écrou.

La chambre de dérivation est constituée par un compartiment supplémentaire du tiroir. Le tiroir comporte un premier compartiment délimité par un piston côté entrée du canal et un deuxième piston côté sortie du canal, portés par une tige et se déplaçant dans le canal du corps de vanne. La chambre correspondant au compartiment supplémentaire est délimitée au moyen du deuxième piston côté sortie du canal du corps de vanne et d'un troisième piston, solidaires de la tige, lesdits pistons constituant les parois de la chambre. Ces pistons ou parois de chambre présentent des surfaces différenciées. Cette chambre s'étend au niveau d'une section étagée du corps de vanne. Ainsi, le piston de plus grande dimension est apte à se déplacer à l'intérieur de l'alésage de plus grande dimension ou canal du corps de vanne tandis que le piston de plus petite dimension est apte à se déplacer à l'intérieur de l'alésage de plus petite dimension du corps. De ce fait, lorsque le fluide entre dans la chambre de dérivation, la pression générée par le fluide exerce un effort sur le tiroir et tend à orienter ledit tiroir vers la position d'ouverture. Dans un premier mode de réalisation de l'invention, les moyens de commande auxiliaires provoquent, au cours de leur actionnement, un déplacement axial d'au moins une partie des moyens de commande principaux. En effet, dans ce cas, l'écrou du système vis/écrou est entraîné en rotation par un moyen d'entraînement en rotation approprié actionné par le moteur électrique, ce moyen d'entraînement en rotation de l'écrou étant un écrou creux fixe en translation sur le corps de la vanne mais entraînable en rotation à l'aide d'une poulie, elle-même entraînable en rotation par le moteur électrique, l'écrou du système vis/écrou étant animé, par rapport à l'écrou creux, d'un déplacement relatif et coopérant avec ledit écrou creux lors de l'alimentation en fluide sous pression du circuit de dérivation constituant les moyens de commande auxiliaires. Le déplacement du tiroir dans le sens d'une ouverture s'opère jusqu'à amenée en butée de l'épaulement de l'écrou du système vis/écrou contre une butée solidaire de l'écrou creux. Cette position de butée de l'ensemble vis/écrou dans le sens de l'ouverture du tiroir est détectée par exemple par des contacteurs non représentés. Le moteur sous tension peut alors entraîner l'écrou creux qui actionne le système vis/écrou. En conséquence, lors de l'initialisation de la vanne ou d'une remise en service de celle-ci après une panne, les moyens de commande principaux de la vanne ne peuvent agir que lorsque la chambre de dérivation a été remplie de manière que l'ensemble vis/écrou soit en contact sur la butée, l'écrou creux pouvant ainsi être entraîné en rotation en vue de générer un déplacement axial de la tige. Ainsi, l'écrou creux entraînant en rotation l'écrou du système vis/écrou permet de positionner avec précision le tiroir. Parallèlement, l'ensemble vis/écrou est maintenu en position de butée contre l'écrou sous l'effet de la pression régnant à l'intérieur de la chambre de dérivation.

De préférence, un piston supplémentaire du tiroir du côté entrée de la vanne, monté à l'extrémité de la tige côté entrée, est en liaison avec un moyen de rappel élastique monté entre l'extrémité du corps de vanne et ce piston.

Lors de la fermeture de la vanne, les moyens de commande principaux déplacent le tiroir dans le sens de la fermeture. La position de recul maximal de la tige d'actionnement, correspondant à la position extrême de fermeture du tiroir obtenue à partir des moyens de commande principaux, correspond à la position de la tige dans laquelle les écrous sont maintenus en butée l'un contre l'autre.

Lorsque la vanne est en position d'ouverture et qu'une panne de courant survient, l'électrovanne n'est plus sous tension et le sens de circulation du fluide au travers de cette électrovanne s'effectue de la chambre vers la voie de mise à l'échappement de l'électrovanne. De cette façon, la chambre de dérivation est mise à l'échappement. La pression générée par le fluide dans la chambre de dérivation chute brutalement à la pression atmosphérique et la pression maintenue ou résiduelle à l'entrée de la vanne appliquée aux différentes sections de piston, notamment à celle du côté rappel élastique en opposition à celle côté passage génère un effort de rappel permettant de repousser le tiroir vers sa position fermeture. Lors du déplacement du tiroir sous l'effet du moyen de rappel, la tige se déplace axialement entraînant l'écrou également en déplacement jusqu'à ce que le tiroir soit en butée contre l'épaulement du corps de vanne s'étendant entre sortie et système vis/écrou, c'est-à-dire en position de fermeture de la vanne. Le rappel élastique permet quant à lui la translation du tiroir vers la position fermeture dans le cas d'une utilisation de la vanne dans un procédé de faible inertie dont la conséquence est une chute brutale de pression simultanément à l'entrée et dans la chambre de dérivation.

La vanne selon la présente invention présente donc un avantage certain car elle permet une fermeture de la vanne même lorsqu'il n'y a plus de courant.

Selon une autre forme de réalisation de l'invention, les moyens de commande auxiliaire sont constitués par au moins un électro-aimant positionné entre la tige du système vis/écrou et le moyen d'entraînement approprié de l'écrou, l'électroaimant provoquant à l'état sous tension un rapprochement de l'ensemble vis/écrou et du moyen d'entraînement approprié de l'écrou en vue d'une coopération entre ces derniers.

Selon encore une autre forme de réalisation de l'invention, la vis, rendue solidaire du tiroir, est couplée avec jeu audit tiroir pour autoriser un déplacement axial relatif entre tiroir et vis lors d'une impossibilité de fonctionnement des moyens de commande principaux. Dans ce mode de réalisation, l'extrémité de la vis se présente sous forme d'une tête épaulée logée à l'intérieur d'un alésage axial ménagé dans le tiroir.

On décrira maintenant l'invention plus en détail en référence au dessin dans lequel :
la figure 1 représente une vue en coupe d'une vanne selon la présente invention en position d'ouverture de la vanne ;
la figure 2 représente une vue en coupe d'une vanne selon la présente invention en position de fermeture de la vanne ;
la figure 3 représente une vue en coupe de la vanne représentée à la figure 1 lors d'une coupure de l'alimentation électrique et
les figures 4 et 5 représentent respectivement, sous forme de vues en coupe en position fermée et en position ouverte, un autre mode de réalisation d'une vanne conforme à l'invention.

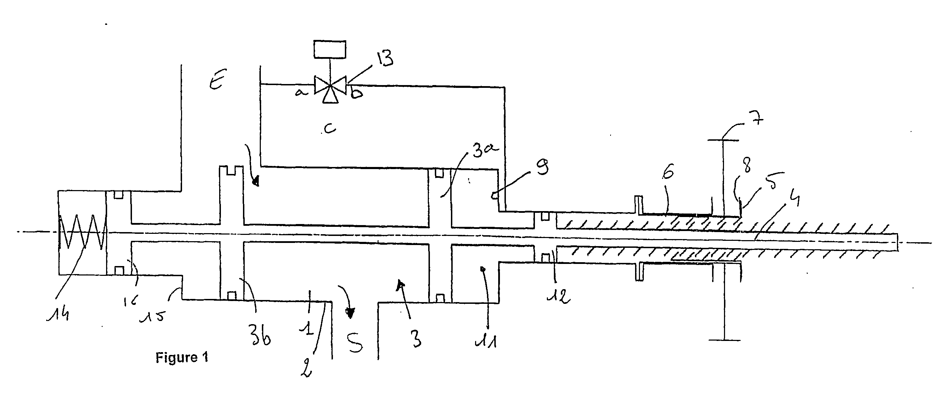

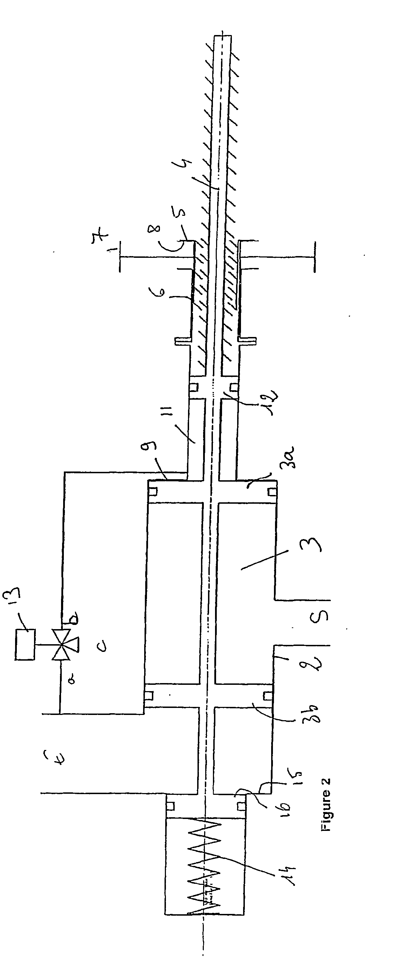

Une vanne de régulation à tiroir à au moins deux voies selon l'invention est du type comportant un corps 1 pourvu d'une entrée E et d'une sortie S de fluide. L'entrée E et la sortie S sont reliées par un canal 2 dans lequel se déplace un tiroir 3 actionné en déplacement par des moyens de commande principaux, ledit tiroir 3 se déplaçant entre une position de fermeture de la vanne (figure 2) et une position d'ouverture de ladite vanne (figure 1).

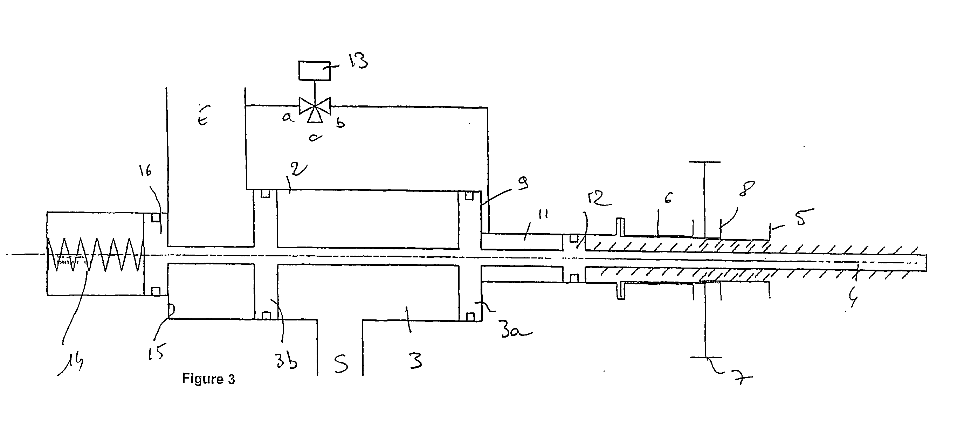

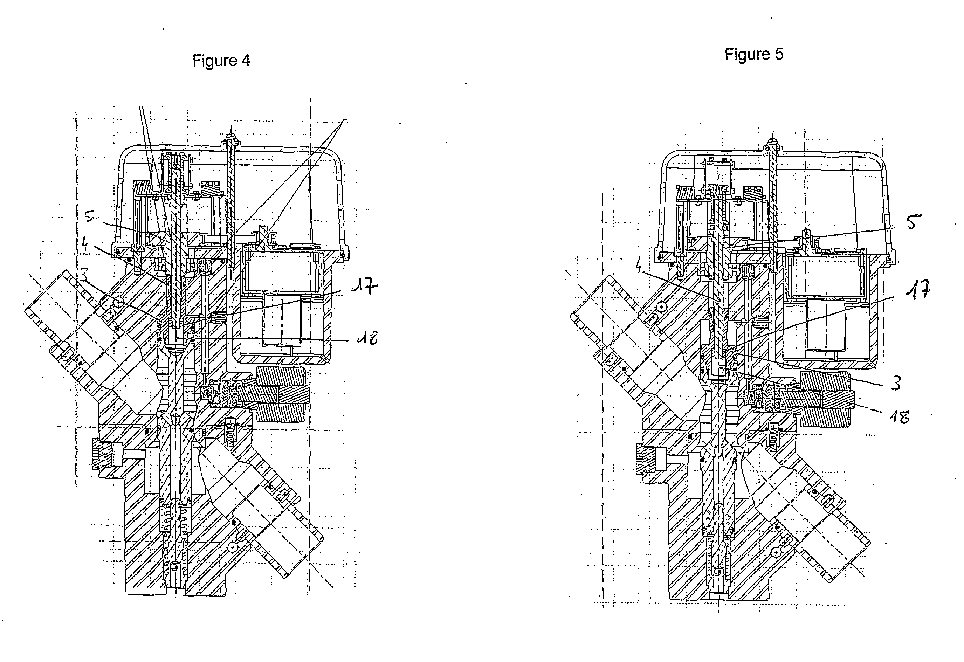

Les moyens de commande principaux sont constitués par un système vis/écrou dont la vis 4 est solidaire du tiroir 3 et montée fixe en rotation mais mobile axialement. Par vis solidaire du tiroir, on entend une vis couplée sans jeu (figure 1 à 3) ou avec jeu (figures 4 et 5) au tiroir. Ainsi, dans les figures 1 à 3, la vis est constamment solidaire en déplacement du tiroir 3 tandis que dans les figures 4 et 5, vis 4 et tiroir 3 sont rendus temporairement solidaires en déplacement lorsque les moyens de commande auxiliaires sont actionnés. La vis 4 porte un écrou 5 entraînable en rotation mais immobilisé axialement par rapport à la vis 4 lors de la mise en pression de la chambre 11 de dérivation.

Dans le mode de réalisation des figures 1 à 3, l'écrou 5 est entraînable en rotation par l'intermédiaire d'un moyen d'entraînement en rotation, tel qu'un écrou creux 6, monté fixe en translation sur le corps 1 de la vanne mais entraînable en rotation à l'aide d'une poulie 7, elle-même entraînable en rotation par un moteur électrique.

Lors de l'ouverture de la vanne pour le passage d'un fluide F tel que de l'eau, le moteur sous tension entraîne l'écrou creux 6 qui actionne le système vis 4/écrou 5.

La vanne comporte également des butées de fin de course 15, 9 correspondant à la position d'ouverture complète et à la position de fermeture complète, la première 15 étant constituée par un épaulement du corps de vanne 1 s'étendant au droit du canal d'entrée E, l'autre 9 étant constituée par un épaulement du corps de vanne 1 contre laquelle vient en butée le tiroir 3 en position de fermeture, cet épaulement 9 étant disposé entre conduit de sortie S et système vis/écrou.

Les moyens de commande auxiliaires comportent une chambre de dérivation 11 et une électrovanne 13 à trois voies a, b c. La chambre de dérivation 11 est constituée par un compartiment supplémentaire du tiroir 3.

Le tiroir 3 comporte un premier compartiment délimité par un piston 3b côté entrée E du canal 2 et un deuxième piston 3a côté sortie S du canal 2, portés par une tige et se déplaçant dans le canal 2 du corps de vanne 1.

La chambre de dérivation 11 correspondant au compartiment supplémentaire est délimitée au moyen du deuxième piston 3a côté sortie S du canal 2 du corps de vanne 1 et d'un troisième piston 12, tous deux solidaires de la tige, lesdits pistons 3a, 12 constituant les parois de la chambre 11. Ces pistons 3a, 12 ou parois de chambre présentent des surfaces différenciées.

Un piston supplémentaire 16 du tiroir 3 du côté entrée E de la vanne, positionné avant le piston 3b, dans la direction du côté entrée vers le côté sortie, est en liaison avec un moyen de rappel élastique 14 monté entre l'extrémité du corps de vanne 2 et ce piston 16.

Cette chambre 11 s'étend au niveau de la section étagée du corps 1 de vanne. Ainsi, le piston 3a de plus grande dimension est apte à se déplacer à l'intérieur de l'alésage de plus grande dimension ou canal 2 du corps de vanne 1 tandis que le piston 12 de plus petite dimension est apte à se déplacer à l'intérieur de l'alésage de plus petite dimension du corps 1 ménagé après l'épaulement formant la butée 9.

De ce fait, lorsque le fluide F entre dans la chambre de dérivation 11, selon les voies a, b de l'électrovanne 13, la pression générée par le fluide F exerce un effort sur le tiroir 3 et tend à orienter ledit tiroir 3 vers la position d'ouverture. Le déplacement du tiroir 3 dans le sens d'une ouverture s'opère jusqu'à amenée en butée de l'épaulement de l'écrou 5 contre une butée 8 solidaire de l'écrou creux 6.

Cette position de butée de l'ensemble vis/écrou dans le sens de l'ouverture du tiroir 3 est détectée par exemple par des contacteurs non représentés. Le moteur sous tension peut alors entraîner l'écrou creux 6 qui actionne le système vis/écrou. En conséquence, lors de l'initialisation de la vanne ou d'une remise en service de celle-ci après une panne, les moyens de commande principaux de la vanne ne peuvent agir que lorsque la chambre de dérivation 11 a été remplie de manière que l'ensemble vis 4/écrou 5 soit en contact sur la butée 8, l'écrou 5 pouvant ainsi être entraîné en rotation en vue de générer un déplacement axial de la tige 4. Ainsi, l'écrou creux 6 entraînant en rotation l'écrou 5 du système vis/écrou permet de positionner avec précision le tiroir 3. Parallèlement, l'ensemble vis/écrou est maintenu en position de butée contre l'écrou 6 sous l'effet de la pression régnant à l'intérieur de la chambre 11 de dérivation.

Lorsque survient une panne de courant, l'électrovanne 13 n'est plus sous alimentation électrique et le passage de l'entrée vers la chambre de dérivation 11 se transforme en un passage entre la chambre de dérivation 11 et la voie c de mise à l'échappement. La chambre de dérivation 11 remplie de fluide se vide. La pression générée par le fluide dans la chambre de dérivation 11 chute donc brutalement à la pression atmosphérique et la pression maintenue ou résiduelle à l'entrée de la vanne appliquée aux différentes sections de piston, notamment à celle du côté rappel élastique en opposition à celle côté passage génère un effort de rappel permettant de repousser le tiroir 3 vers sa position fermeture. Lorsqu'on utilise une vanne selon l'invention sur un canon à neige, il est possible de créer une circulation de fluide dans la chambre de dérivation 11 pour éviter les problèmes de gel.

Dans le mode de réalisation représenté aux figures 4 et 5, la vis 4, rendue solidaire du tiroir 3, est couplée avec jeu audit tiroir 3 pour autoriser un déplacement relatif axial entre tiroir 3 et vis 4 lors d'une impossibilité de fonctionnement des moyens de commande principaux. Dans ce mode de réalisation particulier, l'extrémité de la vis 4 se présente sous forme d'une tête 17 épaulée logée à l'intérieur d'un alésage 18 axial ménagé dans le tiroir 3. L'écrou 5 est quant à lui maintenu constamment en prise avec son moyen d'entraînement en rotation, lui-même actionné à l'aide d'un moteur électrique. A nouveau, dans ce mode de réalisation, les moyens de commande principaux ne peuvent être rendus opérationnels que si les moyens de commande auxiliaires sont actionnés ou en d'autres termes, que si le circuit de dérivation des moyens de commande auxiliaires est alimenté en fluide sous pression pour alimenter la chambre 11 de dérivation identique à celle décrite ci-dessus. Dans ce cas, les moyens de commande auxiliaires exercent sur le tiroir 3 un effort tendant à déplacer ce dernier dans le sens d'une ouverture du tiroir. Lorsque la vis 4 est entraînée en déplacement dans le sens d'une ouverture du tiroir, tiroir et vis se déplacent vers le bas, dans la figure 5, jusqu'à une position extrême. A l'inverse, lorsque la vanne doit être refermée, la vis 4 est déplacée axialement dans l'autre sens par inversion du sens de rotation de l'écrou 5 et l'ensemble vis/tiroir est déplacé axialement vers le haut dans la figure 5 à l'encontre de la force exercée par le circuit de dérivation jusqu'à occuper une position extrême de fermeture conforme à celle représentée à la figure 4. Dans le cas d'une coupure de courant rendant impossible un déplacement du tiroir par l'intermédiaire du dispositif vis 4/écrou 5, lorsque, par exemple, le tiroir occupe une position conforme à celle représentée à la figure 5, dans laquelle la vanne est ouverte, le tiroir peut, par le jeu des pressions du circuit de dérivation mis par l'intermédiaire de l'électrovanne 13 à l'échappement, être ramené dans une position de fermeture alors que la vis 4 est maintenue dans la position qu'elle occupait au moment où est survenue la panne de courant. Ce déplacement axial est rendu possible grâce à la présence de l'alésage 18 au niveau du tiroir. La vis 4 pourra ensuite ultérieurement être ramenée à sa position de départ pour reprendre un fonctionnement normal lors d'une nouvelle alimentation en courant de l'ensemble. On comprend ainsi que dans le fonctionnement du système vis 4/écrou 5, lorsque le système est alimenté en courant, la vis joue le rôle d'un organe de retenue du tiroir sur lequel s'exercent des forces tendant à l'amener en position d'ouverture lorsqu'on souhaite ouvrir la vanne alors que cette vis 4 joue le rôle d'un élément moteur entraînant le tiroir à l'encontre de ces forces lorsque la vanne doit passer d'une position ouverte à une position fermée.

## Revendications

1. Vanne de régulation à tiroir à au moins deux voies, du type comportant un corps (1) pourvu d'une entrée (E) et d'une sortie (S) de fluide (F) reliées par un canal (2) dans lequel se déplace un tiroir (3) actionné en déplacement par des moyens de commande principaux, ledit tiroir (3) se déplaçant entre une position de fermeture complète de la vanne et une position d'ouverture complète de ladite vanne, ladite vanne comportant en outre des moyens de commande auxiliaires permettant le déplacement du tiroir (3) de la position d'ouverture à la position de fermeture lors d'une impossibilité de fonctionnement des moyens de commande principaux,
**caractérisée en ce que** les moyens de commande principaux sont constitués par un système vis (4)/écrou (5) dont la vis (4), solidaire ou apte à être rendue solidaire du tiroir (3), est montée fixe en rotation et mobile axialement par rapport au corps (1) de vanne, l'écrou (5) du système vis (4)/écrou (5) étant entraînable en rotation par l'intermédiaire d'un moteur électrique.

2. Vanne-selon la revendication 1,
**caractérisée en ce que** les moyens de commande principaux sont asservis en fonctionnement aux moyens de commande auxiliaires.

3. Vanne selon l'une des revendications 1 et 2,
**caractérisée en ce que** les moyens de commande auxiliaires sont constitués par au moins un circuit de dérivation comprenant une chambre de dérivation (11) constituée par un compartiment supplémentaire du tiroir (3), une électrovanne (13) à trois voies (a, b, c) permettant d'amener du fluide (F) depuis l'entrée (E) de la vanne vers ladite chambre de dérivation (11) et comprenant une voie de mise à l'échappement (c) de la chambre de dérivation (11), l'alimentation du circuit de dérivation en fluide sous pression permettant d'exercer, sur le tiroir (3), un effort tendant à déplacer le tiroir (3) vers la position d'ouverture en vue de rendre opérationnels les moyens de commande principaux, la mise à l'échappement dudit circuit de dérivation permettant le déplacement du tiroir (3) de la position d'ouverture à la position de fermeture lors d'une impossibilité de fonctionnement des moyens de commande principaux.

4. Vanne selon l'une des revendications 1 à 3,
**caractérisé en ce que** la vis (4), apte à être rendue solidaire du tiroir, est couplée avec jeu audit tiroir pour autoriser un déplacement axial relatif entre tiroir (3) et vis (4) lors d'une impossibilité de fonctionnement des moyens de commande principaux.

5. Vanne selon la revendication 4,
**caractérisée en ce que** l'extrémité de la vis (4) se présente sous forme d'une tête (17) épaulée logée à l'intérieur d'un alésage (18) axial ménagé dans le tiroir (3).

6. Vanne selon la revendication 2,
**caractérisée en ce que** les moyens de commande auxiliaires provoquent, au cours de leur actionnement, un déplacement axial d'au moins une partie des moyens de commande principaux.

7. Vanne selon la revendication 6,
**caractérisée en ce que** l'écrou (5) du système vis (4)/écrou (5) est entraîné en rotation par un moyen d'entraînement en rotation approprié actionné par le moteur électrique, ce moyen d'entraînement en rotation de l'écrou (5) étant un écrou creux (6) fixe en translation sur le corps (1) de la vanne mais entraînable en rotation à l'aide d'une poulie (7), elle-même entraînable en rotation par le moteur électrique, l'écrou (5) du système vis/écrou étant animé, par rapport à l'écrou (6) creux, d'un déplacement relatif et coopérant avec ledit écrou (6) creux lors de l'alimentation en fluide sous pression du circuit de dérivation constituant les moyens de commande auxiliaires.

8. Vanne selon l'une des revendications 1 à 7,
**caractérisée en ce qu'**elle comporte des butées de fin de course (15, 9) correspondant à la position d'ouverture complète et à la position de fermeture complète de la vanne, la première (15) étant constituée par un épaulement du corps de vanne (1) s'étendant au droit du canal d'entrée (E), l'autre (9) étant constituée par un épaulement du corps de vanne (1) contre laquelle vient en butée le tiroir (3) en position de fermeture, cet épaulement (9) étant disposé entre le conduit de sortie (S) et le système vis/écrou.

9. Vanne selon l'une des revendications 3 à 8,
**caractérisée en ce que** le tiroir (3) comporte un premier compartiment délimité par un piston (3b) côté entrée du canal et un deuxième piston (3a) côté sortie du canal, portés par une tige (4) et se déplaçant dans le canal (2) du corps de vanne.

10. Vanne selon la revendication 9,
**caractérisée en ce que** la chambre de dérivation (11) est délimitée au moyen du deuxième piston (3a) côté sortie (S) du canal du corps de vanne et d'un troisième piston (12) du tiroir (3), solidaires de la tige (4), lesdits pistons (3a, 12) constituant les parois de la chambre (11) et présentant des surfaces différenciées, ladite chambre (11) s'étendant au niveau d'une section étagée du corps de vanne, le piston (3a) de plus grande dimension étant apte à se déplacer à l'intérieur de l'alésage de plus grande dimension ou canal (2) du corps de vanne tandis que le piston (12) de plus petite dimension est apte à se déplacer à l'intérieur de l'alésage de plus petite dimension du corps.

11. Vanne selon l'une des revendications 1 et 2,
**caractérisée en ce que** les moyens de commande auxiliaire sont constitués par au moins un électro-aimant positionné entre la tige du système vis/écrou et un moyen d'entraînement en rotation approprié de l'écrou, l'électroaimant provoquant à l'état sous tension un rapprochement de l'ensemble vis/écrou et du moyen d'entraînement approprié de l'écrou en vue d'une coopération entre ces derniers.

12. Vanne selon l'une des revendications 9 et 10,
**caractérisée en ce qu'**un piston supplémentaire (16) du côté entrée (E) de la vanne du tiroir (3) est en liaison avec un moyen de rappel élastique (14) monté entre l'extrémité du corps de vanne (2) et ce piston (16).

## Claims

1. Slide control valve having at least two ways, of the type comprising a body (1) provided with an inlet (E) and an outlet (S) for fluid (F) which are connected by a channel (2) in which is displaced a slide (3) which is displaceably actuated by main actuating means, said slide (3) being displaced between a fully closed position of the valve and a fully open position of said valve, said valve furthermore comprising auxiliary actuating means enabling the slide (3) to be displaced from the open position to the closed position if operation of the main actuating means is not possible, **characterized in that** the main actuating means consist of a screw (4)/nut (5) system of which the screw (4), which is solid with or able to be made solid with the slide (3), is mounted such that it is rotationally rigid and axially mobile relative to the valve body (1), the nut (5) of the screw (4)/nut (5) system being able to be rotationally driven by means of an electric motor.

2. Valve according to claim 1, **characterised in that** the main actuating means are operationally dependent on the auxiliary actuating means.

3. Valve according to either of claims 1 or 2, **characterised in that** the auxiliary actuating means consist of at least one derivation circuit comprising a derivation chamber (11), which consists of an additional compartment of the slide (3), a three-way (a, b, c) electrovalve (13) enabling fluid (F) to be brought from the inlet (E) of the valve to said derivation chamber (11) and comprising a discharge way (c) for the derivation chamber (11), supply of pressurized fluid to the derivation circuit enabling a force to be exerted on the slide (3) which tends to displace the slide (3) towards the open position in order to render operational the main actuating means, the discharging of said derivation circuit enabling the slide (3) to be displaced from the open position to the closed position if operation of the main actuating means is not possible.

4. Valve according to any one of claims 1 to 3, **characterised in that** the screw (4), which is able to be made solid with the slide, is coupled with play to the slide in order to permit a relative axial displacement between the slide (3) and the screw (4) if operation of the main actuating means is not possible.

5. Valve according to claim 4, **characterised in that** the end of the screw (4) is in the form of a shouldered head (17) located within an axial bore (18) provided in the slide (3).

6. Valve according to claim 2, **characterised in that**, during their operation, the auxiliary actuating means cause an axial displacement of at least some of the main actuating means.

7. Valve according to claim 6, **characterised in that** the nut (5) of the screw (4)/nut (5) system is rotationally driven by an appropriate rotational driving means actuated by the electric motor, said means of rotationally driving the nut (5) being a hollow nut (6) which is translationally rigid on the body (1) of the valve but is able to be rotationally driven by means of a pulley (7) which is itself able to be rotationally driven by the electric motor, the nut (5) of the screw/nut system being displaced relative to the nut (6) and cooperating with said hollow nut (6) when the derivation circuit constituting the auxiliary actuating means is supplied with pressurized fluid.

8. Valve according to any one of claims 1 to 7, **characterised in that** said valve comprises stroke-end stops (15, 9) corresponding to the fully open position and the fully closed position of the valve, the first stroke-end stop (15) consisting of a shoulder of the valve body (1), said shoulder extending in line with the inlet channel (E), the other stroke-end stop (9) consisting of a shoulder of the valve body (1), against which stop the slide (3) abuts in the closed position, said shoulder (9) being disposed between the outlet channel (S) and the screw/nut system.

9. Valve according to any one of claims 3 to 8, **characterised in that** the slide (3) comprises a first compartment delimited by a piston (3b) on the channel inlet side and by a second piston (3a) on the channel outlet side, said pistons being mounted on a rod (4) and being displaceable in the channel (2) of the valve body.

10. Valve according to claim 9, **characterised in that** the derivation chamber (11) is delimited by means of the second piston (3a) on the outlet side (S) of the channel of the valve body and by a third piston (12) of the slide (3), said pistons (3a, 12) being integral with the rod (4) and constituting the walls of the chamber (11) and having graduated surfaces, said chamber (11) extending at a stepped section of the valve body, the larger piston (3a) being able to be displaced within the larger bore or channel (2) of the valve body, whereas the smaller piston (12) is able to be displaced within the smaller bore of the body.

11. Valve according to either of claims 1 or 2, **characterised in that** the auxiliary actuating means consist of at least one electromagnet positioned between the rod of the screw/nut system and an appropriate means of rotationally driving the nut, the electromagnet, in the energized state, causing the screw/nut assembly and the appropriate means of driving the nut to be brought close together for the purpose of cooperation between said assembly and said means.

12. Valve according to either of claims 9 or 10, **characterised in that** a further piston (16) on the inlet side (E) of the slide (3) valve communicates with an elastic return-movement means (14) mounted between the end of the valve body (2) and said piston (16).

## Patentansprüche

1. Stellventil mit Schieber und mindestens zwei Wegen, mit einem Körper (1), welcher mit einem Fluid-Einlass (E) und einem Fluid-Auslass (S) versehen ist, die durch einen Kanal (2) verbunden sind, in dem sich ein Schieber (3) bewegt, dessen Verschiebung durch Hauptsteuerungsmittel betätigt wird, wobei der genannte Schieber (3) sich zwischen einer Stellung der vollständigen Schließung des Ventils und einer Stellung der vollständigen Öffnung des genannten ventils bewegt, wobei das genannte Ventil ferner Hilfssteuerungsmittel aufweist, die die Verschiebung des Schiebers (3) von der Öffnungsstellung zu der Schließstellung hin dann ermöglichen, wenn die Hauptsteuerungsmittel nicht funktionieren können, **dadurch gekennzeichnet, dass** die Hauptsteuerungsmittel durch ein System Gewindespindel (4)/Spindelmutter (5) gebildet sind, dessen mit dem Schieber (3) fest verbundene oder fest verbindbare Gewindespindel (4) verdrehsicher und axial beweglich in Bezug auf den Ventilkörper (1) montiert ist, wobei die Spindelmutter (5) des Systems Gewindespindel (4)/ Spindelmutter (5) durch einen Elektromotor drehantreibbar ist.

2. Ventil nach Anspruch 1, **dadurch gekennzeichnet, dass** die Hauptsteuerungsmittel funktionsmäßig an die Hilfssteuerungsmittel gekoppelt sind.

3. Ventil nach einem der Ansprüche 1 und 2, **dadurch gekennzeichnet, dass** die Hilfssteuerungsmittel durch mindestens einen Ableitungskreis mit einer Ableitungskammer (11) gebildet sind, die durch einen zusätzlichen Raum des Schiebers (3) gebildet ist, wobei ein Elektroventil (13) mit drei Wegen (a, b, c) es ermöglicht, Fluid (F) von dem Einlass (E) des Ventils zu der genannten Ableitungskammer (11) zuzuführen, und einen Entlüftungsweg (c) für die Ableitungskammer aufweist, wobei die Beaufschlagung des Ableitungskreises mit Druckfluid es ermöglicht, auf den Schieber (3) eine Kraft zur Verschiebung des Schiebers (3) zu der Öffnungsstellung hin auszuüben, um die Hauptsteuerungsmittel einsatzfähig zu machen, wobei die Entlüftung des genannten Ableitungskreises die Verschiebung des Schiebers (3) von der Öffnungsstellung zu der Schließstellung hin ermöglicht, wenn die Hauptsteuerungsmittel nicht funktionieren können.

4. Ventil nach einem der Ansprüche 1 bis 3, **dadurch gekennzeichnet, dass** die Gewindespindel (4), die geeignet ist, mit dem Schieber fest verbunden zu werden, mit Spiel an den genannten Schieber gekoppelt ist, um eine relative axiale Verschiebung zwischen Schieber (3) und Gewindespindel (4) zuzulassen, wenn die Hauptsteuerungsmittel nicht funktionieren können.

5. Ventil nach Anspruch 4, **dadurch gekennzeichnet, dass** das Ende der Gewindespindel (4) die Form eines Kopfes (17) mit Absatz hat, welcher im Inneren einer axialen, in dem Schieber ausgebildeten Bohrung (18) aufgenommen ist.

6. Ventil nach Anspruch 2, **dadurch gekennzeichnet, dass** die Hilfssteuerungsmittel während ihrer Betätigung eine axiale Verschiebung mindestens eines Teiles der Hauptsteuerungsmittel bewirken.

7. Ventil nach Anspruch 6, **dadurch gekennzeichnet, dass** die Spindelmutter (5) des Systems Gewindespindel (4)/Spindelmutter (5) durch ein geeignetes Drehantriebsmittel drehangetrieben wird, das von dem Elektromotor betätigt wird, wobei dieses Mittel für den Drehantrieb der Spindelmutter (5) eine Hohlmutter (6) ist, die auf dem Körper (1) des Ventils verschiebefest angeordnet ist, aber mit Hilfe einer Antriebsscheibe (7) drehangetrieben werden kann, die selbst von dem Elektromotor drehangetrieben werden kann, wobei die Spindelmutter (5) des Systems Gewindespindel/Spindelmutter in Bezug auf die Hohlmutter (6) relativ verschoben wird und mit der genannten Hohlmutter (6) zusammenwirkt, wenn der die Hilfssteuerungsmittel bildende Ableitungskreis mit Druckfluid beaufschlagt wird.

8. Ventil nach einem der Ansprüche 1 bis 7, **dadurch gekennzeichnet, dass** es Endstellungaanschläge (15, 9) aufweist, die der Stellung der vollständigen Öffnung und der Stellung der vollständigen Schließung des Ventils entsprechen, wobei der erste (15) durch einen sich rechtwinklig zu dem Einlasskanal (E) erstreckenden Absatz des Ventilkörpers (1) und der andere (9) durch einen Absatz des Ventilkörpers (1), gegen den der Schieber (3) in der Schließstellung anschlägt, gebildet sind, wobei dieser Absatz (9) zwischen dem Auslasskanal (S) und dem System Gewindespindel/Spindelmutter angeordnet ist.

9. Ventil nach einem der Ansprüche 3 bis 8, **dadurch gekennzeichnet, dass** der Schieber (3) einen ersten, kanaleinlasssseitig durch einen Kolben (3b) und kanalauslasssseitig durch einen zweiten Kolben (3a) begrenzten Raum aufweist, welche von einer Stange (4) getragen werden und sich in dem Kanal (2) des Ventilkörpers bewegen.

10. Ventil nach Anspruch 9, **dadurch gekennzeichnet, dass** die Ableitungskammer (11) mittels des zweiten Kolbens (3a) auf der Seite des Auslasses (S) des Kanals der Ventilkörpers und eines dritten Kolbens (12) des Schiebers (3) begrenzt ist, welche mit der Stange (4) fest verbunden sind, wobei die genannten Kolben (3a, 12) die Wände der Kammer (11) bilden und abgestufte Oberflächen aufweisen, wobei die genannte Kammer (11) sich an einem abgesetzten Abschnitt des Ventilkörpers erstreckt, wobei der Kolben (3a) mit größerer Abmessung geeignet ist, sich im Inneren der größeren Bohrung oder des größeren Kanales (2) des Ventilkörpers zu bewegen, während der Kolben (12) mit kleinerer Abmessung geeignet ist, sich im Inneren der kleineren Bohrung des Körpers zu bewegen.

11. Ventil nach einem der Ansprüche 1 und 2, **dadurch gekennzeichnet, dass** die Hilfssteuerungsmittel durch mindestens einen Elektromagneten gebildet sind, der zwischen der Stange des Systems Gewindespindel/Spindelmutter und einem geeigneten Mittel für den Drehantrieb der Mutter positioniert ist, wobei der Elektromagnet im Spannungszustand ein Zusammenrücken der Anordnung Gewindespindel/Spindelmutter und des geeigneten Mittels für den Drehantrieb der Mutter zwecks eines Zusammenwirkens der Letzteren bewirkt.

12. Ventil nach einem der Ansprüche 9 und 10, **dadurch gekennzeichnet, dass** ein zusätzlicher Kolben (16) auf der Seite des Einlasses (E) des Ventils des Schiebers (3) mit einem elastischen Rückstellmittel (14) verbunden ist, das zwischen dem Ende des Ventilkörpers (2) und diesem Kolben (16) montiert ist.
